# EUROPEAN PATENT APPLICATION

(11) **EP 3 226 020 A1**
(43) Date of publication of application: **04.10.2017**
(21) Application number: 16163206.2
(22) Date of filing: 31.03.2016
(51) Int. Cl.: G01S 5/00, G01S 5/02, G01S 19/14

(54) **INDOOR LOCATION SYSTEM**

(71) Applicant: Konica Minolta Business Solutions Europe GmbH, 30855 Langenhagen (DE)
(72) Inventor: Gotthard, Petr, 639 00 Brno (CZ); Jankech, Tomas, 639 00 Brno (CZ)
(74) Representative: Hoffmann Eitle

(57) **Abstract**

There is provided a location system for determining the location of a mobile beacon (200) inside a building (100) based on a beacon signal transmitted by the mobile beacon (200). The location system comprises at least two timing devices (300), each timing device comprising: a clock; a beacon signal receiver for receiving the beacon signal; a time-of-arrival measuring module for measuring, using the clock, a time-of-arrival of the received beacon signal at the beacon signal receiver; and a Global Navigation Satellite System, GNSS, signal receiver for receiving a GNSS signal from at least one GNSS satellite. The location system further comprises data storage configured to store fixed location coordinates defining respective fixed locations of the timing devices (300), and a timing difference compensator configured to compensate for differences between the times kept by the clocks (320) using the GNSS signals received by the timing devices and the stored fixed location coordinates of the timing devices. The location system further comprises a location calculator (500) configured to calculate the location of the mobile beacon (200) within the building (100) based on measured time-of-arrival values that have been compensated for differences between the times kept by the clocks by the timing difference compensator.

## Description

### [Technical Field]

The present invention generally relates to the field of indoor location (or 'tracking') systems for determining the location of a mobile beacon inside a building.

### [Background]

The tracking of objects and people using signals received from satellites of a Global Navigation Satellite System (GNSS), such as GPS, Galileo or GLONASS satellites, is well-known and is based on time-of-flight calculations that rely on very precise clock synchronisation. The GNSS satellites transmit pulses synchronised by atomic clocks. The time-of-arrival (TOA) values of these pulses that are obtained by a GNSS receiver on Earth are used to calculate respective time-of-flight values, which are then processed using navigation equations to determine the GNSS receiver's location and the offset of its clock relative to the satellite time. Pulses from at least four satellites are required to solve equations with four unknowns, namely the receiver's position (e.g. in terms of its latitude, longitude and altitude) and the offset of its clock.

As the four or more GNSS satellite signals that are required for positioning and timing cannot normally be received inside buildings, indoor location systems have been developed to track people and objects inside buildings. One such example is the positioning system described in WO 2014/124785 A1, which uses timing devices that listen for a signal from a mobile tag and determine the signal's TOA at each timing device. Timestamps of signal reception (TOA values) are then transmitted to a server, which calculates the distance between the mobile tag and the timing devices and hence the location of the mobile tag.

### [Summary]

The present inventors have recognised that conventional indoor location systems of the kind identified above often employ timing devices that synchronise their clocks using a wired local area network (LAN), which is often costly and inconvenient to install, particularly in rented buildings, where construction works are prohibited or difficult to obtain approval for. Moreover, even where the wired LAN is replaced by a wireless network, the location system still needs to be provided with a highly stable reference clock and extra hardware for reliably and precisely synchronising the clocks of the timing devices to the reference clock, which increases the cost and complexity of the system.

Having recognised these draw-backs of conventional indoor location systems, the present inventors have devised a location system which avoids the need for a local reference clock and means for synchronising the timing devices to this reference clock altogether. A location system according to an embodiment of the invention described herein is configured to make use of data defining the respective fixed location coordinates of the timing devices, when these are installed at the periphery of a building (e.g. at the windows of the building), to allow each timing device to synchronise its clock to GNSS satellite time based the (inherently limited) reception of GNSS signals that can be achieved under these circumstances. In the embodiment, reception of a signal from a single GNSS satellite (or from two or three GNSS satellites) is sufficient for synchronisation. Distributing the timing devices about the periphery of the building also allows them to tap into renewable sources of energy (such as solar power or the thermal gradient across the boundary of the building), thereby making the location system energy-efficient.

More particularly, the present inventors have devised a location system for determining the location of a mobile beacon inside a building based on a beacon signal transmitted by the mobile beacon. The location system comprises at least two timing devices, wherein each of the timing devices comprises: a clock; a beacon signal receiver for receiving the beacon signal; a time-of-arrival measuring module for measuring, using the clock, a time-of-arrival of the received beacon signal at the beacon signal receiver; and a GNSS signal receiver for receiving a GNSS signal from at least one GNSS satellite. The location system further comprises data storage configured to store fixed location coordinates defining respective fixed locations of the timing devices, and a timing difference compensator configured to compensate for differences between the times kept by the clocks using the GNSS signals received by the timing devices and the stored fixed location coordinates of the timing devices. The location system further comprises a location calculator configured to calculate the location of the mobile beacon within the building based on measured time-of-arrival values that have been compensated for differences between the times kept by the clocks by the timing difference compensator.

The present inventors have further devised a timing device for use in a location system for determining the location of a mobile beacon inside a building based on a beacon signal transmitted by the mobile beacon, the location system comprising at least two of the timing devices and a location calculator for calculating the location of the mobile beacon based on signals transmitted by the timing devices. The timing device comprises: a clock, a beacon signal receiver for receiving the beacon signal, and a time-of-arrival measuring module for measuring, using the clock, a time-of-arrival of the received beacon signal at the beacon signal receiver. The timing device further comprises a GNSS signal receiver for receiving a GNSS signal from at least one GNSS satellite. The timing device also has a clock synchronisation module configured to store fixed location coordinates defining a fixed location of the timing device, and to synchronise the clock to a GNSS satellite signal using the fixed location coordinates of the timing device and the GNSS signal received by the GNSS signal receiver, the time-of-arrival measuring module being configured to measure the time-of-arrival of the received beacon signal at the beacon signal receiver using the synchronised clock. The timing device further comprises a transmission module for transmitting a signal comprising the time-of-arrival measured by the time-of-arrival measuring module to the location calculator for calculation of the location of the mobile beacon.

The present inventors have further devised a timing device for use in a location system for determining the location of a mobile beacon inside a building based on a beacon signal transmitted by the mobile beacon, the location system comprising at least two of the timing devices and a location calculator for calculating the location of the mobile beacon based on signals transmitted by the timing devices. The timing device comprises a clock, a beacon signal receiver for receiving the beacon signal, and a time-of-arrival measuring module for measuring, using the clock, a time-of-arrival of the received beacon signal at the beacon signal receiver. The timing device further comprises a GNSS signal receiver for receiving a GNSS signal from at least one GNSS satellite. The timing device also has a clock delay calculation module configured to store fixed location coordinates defining a fixed location of the timing device, and to calculate a delay between the time kept by the clock and a GNSS satellite signal using the fixed location coordinates of the timing device and the GNSS signal received by the GNSS signal receiver. The timing device further comprises a transmission module for transmitting a signal based on the time-of-arrival measured by the time-of-arrival measuring module and the delay calculated by the clock delay calculation module to the location calculator for calculation of the location of the mobile beacon.

The present inventors have further devised a timing device for use in a location system for determining the location of a mobile beacon inside a building based on a beacon signal transmitted by the mobile beacon, the location system comprising at least two of the timing devices and a location calculator for calculating the location of the mobile beacon based on signals transmitted by the timing devices. The timing device comprises a beacon signal receiver for receiving the beacon signal, and a GNSS signal receiver for receiving a GNSS signal from at least one GNSS satellite. The timing device further comprises a time-of-arrival measuring module configured to store fixed location coordinates defining a fixed location of the timing device, and calculate a GNSS time stamp using the received GNSS signal and the stored fixed location coordinates of the timing device in response to the beacon signal receiver receiving the beacon signal, the GNSS time stamp being indicative of a time-of-arrival of the beacon signal at the timing device. The timing device further comprises a transmission module for transmitting a signal comprising the GNSS time stamp to the location calculator for calculation of the location of the mobile beacon.

### [Brief Description of the Drawings]

Embodiments of the invention will now be explained in detail, by way of example only, with reference to the accompanying figures, in which:
Fig. 1 is a schematic illustrating a floor plan of a building having a location system according to a first embodiment of the present invention;
Fig. 2A is a schematic cross-sectional view of a window of the building having a timing device according to the first embodiment fixed to an indoor surface thereof;
Fig. 2B is a perspective view of the timing device illustrated in Fig. 2A;
Fig. 3 illustrates functional components of the timing device of the first embodiment;
Fig. 4 illustrates functional components of a timing device according to a second embodiment of the present invention; and
Fig. 5 illustrates functional components of a timing device according to a third embodiment of the present invention.

### [Detailed Description of Embodiments]

In the following, the term "exemplary" merely refers to an example, which may or may not be the most preferred example. The remaining terms used in this specification take their usual meaning in the art unless indicated otherwise. In the following description of embodiments, like reference signs are used to denote like components, unless stated otherwise.

### [First Embodiment]

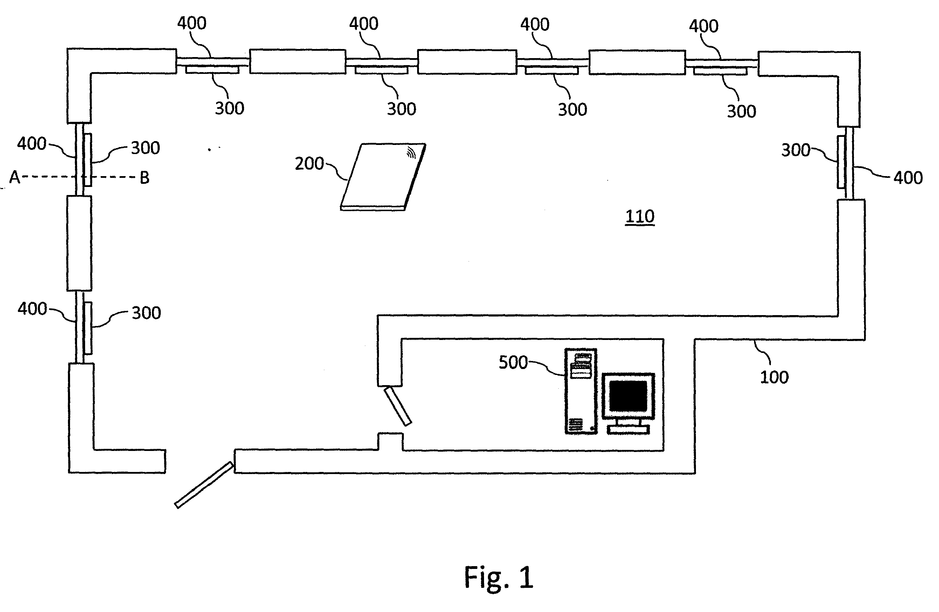

Figure 1 is a schematic illustration of a floor plan of a building 100 having a location system according to a first embodiment of the present invention, which can be used to determine the location of a mobile beacon 200 in a monitored area 110 inside the building 100 (which may encompass the whole interior of the building 100 or only a part thereof). The mobile beacon 200 may, as in the present embodiment, repeatedly transmit a beacon signal at regular intervals for use by the location system to locate the mobile beacon 200. However, the intervals at which the mobile beacon 200 transmits the beacon signal need not be regular, and may, in other embodiments, be irregular or random (which may be advantageous where there are multiple mobile beacons 200 in the building that transmit beacon signals on a common frequency). In other embodiments, the mobile beacon 200 may transmit the beacon signal on-demand, in response to beacon signal transmission requests from the location system (which may be transmitted by one or more of the timing devices 300 or by a central transmitter, for example). The beacon signal may, as in the present embodiment, contain a unique identifier to allow the location system to identify the mobile beacon 200. By way of an example, the mobile beacon 200 is provided in the form of a wireless smart-card in the present embodiment.

The location system of the present embodiment comprises seven timing devices 300, each of which is fixed to an inside surface of a respective a window 400 of the building 100. Each of the timing devices 300 is configured to receive the beacon signal from the mobile beacon 200 and measure its time-of-arrival (TOA), i.e. the reception time. The TOA values obtained by the timing devices 300 are then used by a computer 500 (e.g. a personal computer (PC) or, as in the present embodiment, a server, which is configured to wirelessly communicate with the timing devices 300), which is arranged to function as a location calculator to calculate the location of the mobile beacon 200 by triangulation, using well-known time-of-flight calculations. The number of timing devices 300 in the location system is, of course, not limited to seven; in general, at least two timing devices 300 are required to allow the location of the mobile beacon 200 to be determined. The number of timing devices required and their distribution in the building 100 (not necessarily on the same floor) may depend on factors such as the arrangement and composition of interior walls in the building, the power of the beacon signal transmitted by the mobile beacon, etc. For example, provided that the beacon signal can be received throughout the monitored area 110 irrespective of the location of the mobile beacon 200 therein, the positioning system of the present embodiment may be modified to have only two of timing devices 300, which may be positioned at any two of the windows 400. In this case, constraints on the possible locations of the mobile beacon 200 that follow from the layout of the building 100 may be programmed into the computer 500 and used in its calculations of the mobile beacon's location. In other embodiments, the location system may comprise three timing devices 300, for example.

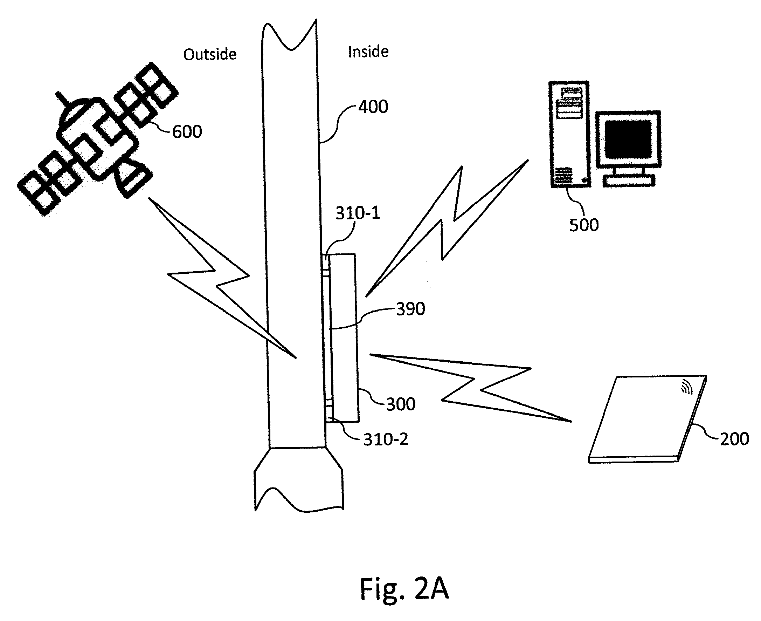

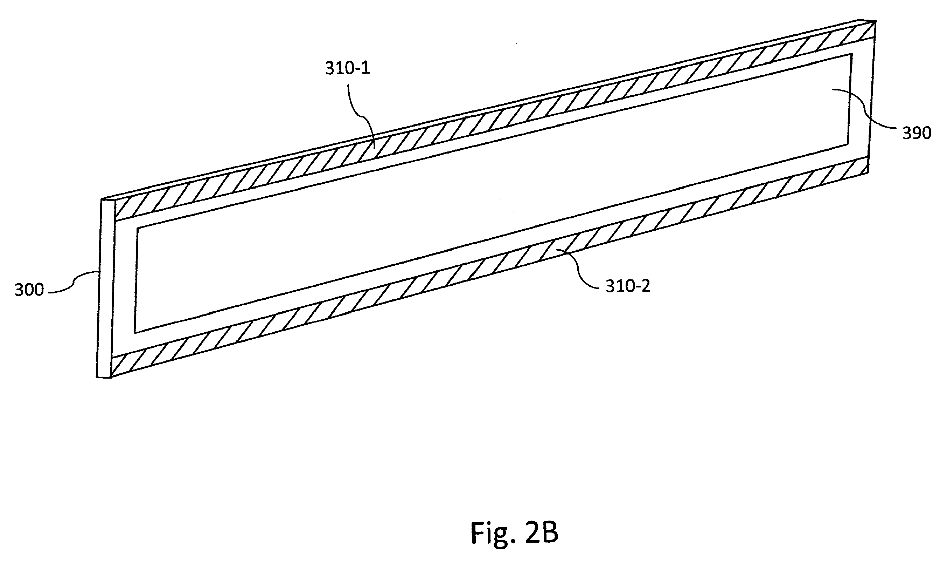

A cross-sectional view of one of the windows 400 and a timing device 300 fixed to that widow, taken along the line A-B in Fig. 1, is illustrated in Fig. 2A. The remaining timing devices 300 in Fig. 1 may be attached to their respective windows in the same way, as in the present embodiment. As shown in Fig. 2A, the timing device 300 is fixed to the window 400 by fixing means in the exemplary form of two adhesive strips, 310-1 and 310-2. Other well-known means of fixing the timing device 300 to the window 400 (whether the window frame or, as in the present embodiment, the window pane) may alternatively be used. The timing device 300 may, as shown in the perspective view of Fig. 2B, be elongate or strip-like, and may have a colour similar to that of the window frame in order to appear inconspicuous when mounted on the window. The elongate shape also allows a solar panel 390 or other kind of energy harvester to be provided on a surface of the timing device 300 facing the window 400, with a surface area sufficient to maintain a charge level of an energy storage module that powers the timing device 300.

The calculations performed by the location calculator 500 to determine the location of the mobile beacon 200 rely on precise measurements of the TOA at two or more (e.g. three) of the timing devices 300 and this, in turn, requires the clocks used by the timing devices 300 for their TOA measurements to be synchronised, or the relationship between the times kept by the clocks to be known. The term "clock" as used herein is to be understood to refer generally to a timing signal generator which is configured to generate a timing signal for measuring the TOA. The clock may keep time like a conventional timepiece (in terms of hours, minutes, seconds etc.) or it may, as in the present embodiment, be a simple counter which counts up or down for a predetermined number of steps before being reset to an initial value (e.g. zero).

In the present embodiment, the drawbacks inherent in conventional approaches to synchronising the clocks or determining their relative delays - including the expense and inconvenience in providing the necessary reference clock, and the cabling or additional wireless communication hardware for synchronising the clocks of the timing devices to the reference clock - are avoided firstly by providing each of the timing devices 300 with a GNSS signal receiver for receiving a GNSS signal from at least one GNSS satellite 600 (e.g. a GPS, Galileo or GLONASS satellite) so that the timing device's TOA measurements can be referenced to a GNSS satellite signal (also referred to herein as 'GNSS satellite time' or 'GNSS time'), and by disposing the timing devices at the periphery of the building 100 (in the present embodiment, attaching the timing devices 300 to the windows 400 of the building) so that they are able to receive the GNSS signal from at least one GNSS satellite. As the reception of GNSS signals from fewer than four GNSS satellites cannot normally allow the GNSS satellite time to be calculated, the inherently limited GNSS satellite reception that results from the above-described placement of the timing devices 300 at the periphery of the building 100 is compensated for by determining the fixed (i.e. static) location coordinates of each timing device 300 (e.g. in terms of its longitude, latitude, altitude) and making use of this additional information, which does not change over time, in each calculation of the GNSS time based on the received GNSS signal. The coordinates of each timing device 300 may be determined using data from geographical maps or surveys, and information from building plans, for example, and stored in data storage. In the present embodiment, the data storage is, by way of example, a distributed data storage comprising memory modules in the timing devices 300 of the system, wherein the memory module in each timing device 300 stores the location coordinates of that timing device 300. Using this information, each timing device 300 is able to determine the GNSS time from the GNSS signal(s) it receives from the one or more GNSS satellites that are 'visible' to the timing device 300, so that the determined GNSS time can be used to synchronise the clock of the timing device 300 or determine its delay (whether positive or negative) relative to the GNSS time.

More particularly, location systems according to embodiments of the present invention comprise a timing difference compensator configured to compensate for differences between the times kept by the clocks of the timing devices 300 using the fixed location coordinates of the timing devices 300 stored in the data storage and the GNSS signals received by the timing devices 300. The location calculator 500 is configured to calculate the location of the mobile beacon 200 within the building 100 based on measured TOA values that have been compensated for differences between the times kept by the clocks by the timing difference compensator.

The differences between the times kept by the clocks may be compensated for in a number of different ways. In some embodiments, the timing difference compensator is configured to compensate for differences between the times kept by the clocks 320 by calculating, for each of timing devices 300, a respective corrected TOA value of the beacon signal by correcting the TOA values measured by the timing device 300 based on the location coordinates of the timing device 300 and the GNSS signal received by the timing device 300; in these embodiments, the location calculator is configured to calculate the location of the mobile beacon 200 within the building 100 using the corrected TOA values. In other embodiments (including the present embodiment), the timing difference compensator is configured to compensate for differences between the times kept by the clocks 320 by synchronising the clocks 320 using the stored location coordinates of the timing devices 300 and the GNSS signals received by the timing devices 300; in these embodiments, the location calculator 500 is configured to calculate the location of the mobile beacon 200 within the building 100 using the TOA values measured by the TOA measuring modules 340.

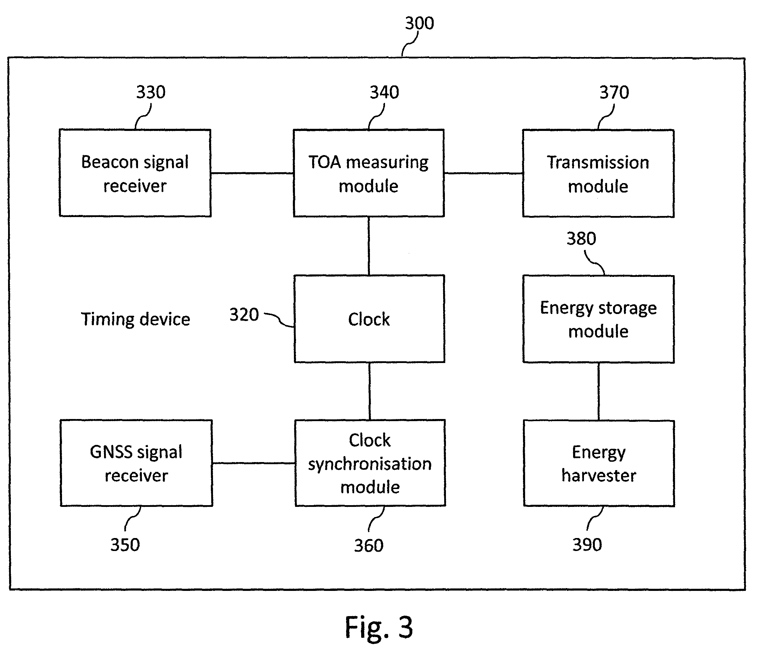

The compensation scheme used in the present embodiment, and further details of the timing devices 300, will now be described in detail with reference to Fig. 3

Figure 3 is a schematic illustrating functional components of the timing device 300 of the present embodiment. As shown in Fig. 3, the timing device 300 comprises a time-keeping device or clock 320, a beacon signal receiver 330 for receiving the beacon signal from the mobile beacon 200, and a TOA measuring module 340 which is configured to measure, using the clock 320, the TOA of the beacon signal received by the beacon signal receiver 330. The timing device 300 also includes a GNSS signal receiver 350 which is configured to receive a GNSS signal from one or more GNSS satellites 600, and a clock synchronisation module 360 which is configured to store (in a memory module thereof) fixed location coordinates defining the fixed location of the timing device 300, and synchronise the clock 320 to a GNSS satellite signal of a GNSS satellite whose signal has been received by the GNSS signal receiver 350, using the stored fixed location coordinates of the timing device 300 and the GNSS signal received by the GNSS signal receiver 350. The clock synchronisation module 360 may, as in the present embodiment, have its own internal clock and be configured to generate a GNSS time and a 'pulse-per-second' signal based on the GNSS signal received by the GNSS signal receiver 250 and the location coordinates, and use the pulse-per-second signal to synchronise the clock 320. The clock synchronisation module 360 is furthermore configured to repeatedly synchronise the clock 320 (e.g. at regular intervals) so that the clocks 320 on the timing devices 300 remain sufficiently synchronised with the GNSS satellite signals (and therefore with each other) in order to allow the location of the mobile beacon 200 within the building to be calculated. In other embodiments, the clock synchronisation module 360 may continuously synchronise the clock 320, e.g. via a phase-locked loop.

The TOA measuring module 340 is thus configured to measure the TOA of the received beacon signal at the beacon signal receiver 330 using the synchronised clock 320. The clock 320, TOA measuring module 340 and the clock synchronisation module 360 may be implemented using any known signal processing hardware known to those skilled in the art.

The timing device 300 also has a transmission module 370 for transmitting a signal comprising the TOA values obtained by the TOA measuring module 340 to the computer 500 which is configured to function as the location calculator, in order to enable the computer 500 to calculate the location of the mobile beacon 200 in the building 100. The signal transmitted by the transmission module 370 may, as in the present embodiment, also comprise the unique identifier of the timing device 300, as well as the aforementioned unique identifier of the mobile beacon 200 which was transmitted to the timing device 300 via the beacon signal. The transmission module 370 and the communication module of the computer 500 may communicate using any known technology (e.g. by Bluetooth™).

As shown in Fig. 3, the timing device 300 further comprises an energy storage module 380 for powering one or more of the above-described components of the timing device 300. The energy storage module 380 may be provided in any suitable form, for example a battery. Alternatively, the energy storage module 380 may, as in the present embodiment, comprise a capacitor or a supercapacitor, which has the advantage of being able to provide a far higher number of charge/discharge cycles over its life-time than a battery and thus effectively maintenance-free. Capacitors and supercapacitors are also capable of operating over a wide temperature range, which is particularly advantageous in variants of the present embodiment (discussed below) in which the timing device 300 is mounted on the exterior of the building 100 (e.g. to an outer surface of the window 400).

The timing device 300 preferably also has an energy harvester 390 for charging the energy storage module 380. By way of an example, the energy harvester 390 is provided in the form of a solar panel in the present embodiment, as noted above.

It will be appreciated from the foregoing description that the location system of the present embodiment provides a number of significant advantages over known indoor location systems. Firstly, the location system of the present embodiment is fully wireless so its deployment is very easy and particularly suited to rented buildings, where construction works are prohibited or difficult to obtain approval for. Furthermore, the location system of the present embodiment does not require any wires or power plugs, and it does not require any hole drilling (no wall-mounting). It also requires little or no maintenance, and no system reconfiguration is needed when a new timing device 300 is deployed. Further, the provision of an energy harvester 390 dispenses with the need for battery replacement. The location system of the present embodiment also does not require any expensive high-accuracy oscillators because the timing devices 300 can keep their clocks synchronized with the GNSS signal.

### [Second Embodiment]

As noted above, the timing difference compensator of the location system may be configured to compensate for the differences between the times kept by the clocks 300 in a number of different ways. In the present embodiment, another compensation scheme is employed, wherein the timing difference compensator is configured to compensate for differences between the times kept by the clocks 320 by calculating, for each of the timing devices, a respective corrected TOA value of the beacon signal by correcting the TOA measured by the timing device based on the stored location coordinates of the timing device and the GNSS signal received by the timing device. In the present embodiment, the location calculator is configured to calculate the location of the mobile beacon 200 within the building 100 using the corrected TOA values.

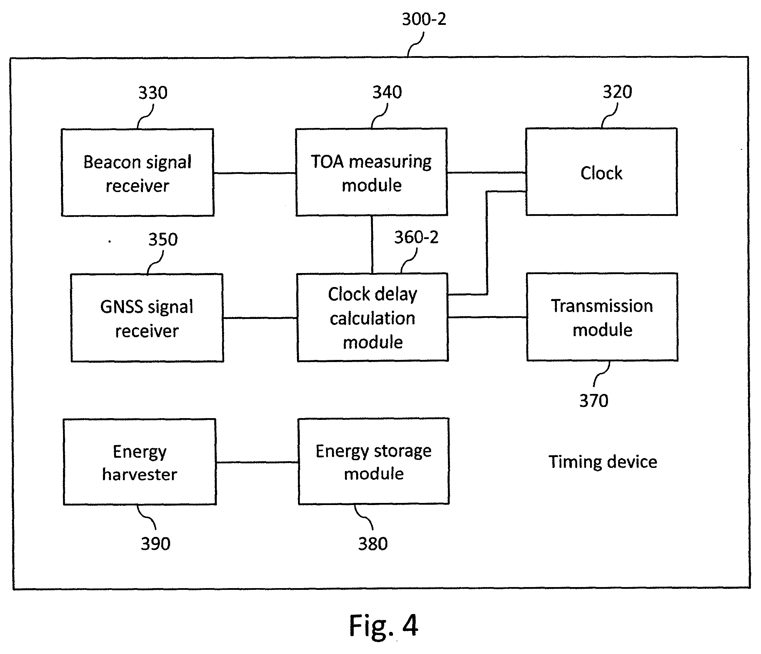

A timing device 300-2 according to a second embodiment of the present invention will now be described with reference to Fig. 4, in which the components of the timing device 300-2 that are the same as those of the timing device 300 of the first embodiment are labelled with the same reference signs.

The timing device 300-2 of the present embodiment differs from the timing device 300 of the first embodiment by the way in which it compensates for differences between the times kept by the clocks of the timing devices of the location system. More particularly, instead of synchronising the clock 320 on the basis of the received GNSS signal, a clock delay calculation module 360-2 of the timing device 300-2 of the present embodiment calculates the delay between the time kept by the on-board clock 320 and the GNSS time derived from the received GNSS satellite signal, and corrects the TOA value of the beacon signal measured by the TOA measuring module 340 using the calculated delay. More particularly, the clock delay calculation module 360-2 calculates the delay by comparing the time of the clock 320 with the GNSS time which it generates using the GNSS signal from the GNSS signal receiver 350 and the fixed location coordinates of the timing device 300-2 stored in the clock delay calculation module 360-2, and calculates a corrected TOA value by adding the calculated delay to the TOA value measured by the TOA measuring module 340. The operation of other components of the timing device 300-2 of the present embodiment are the same as described above in relation to the first embodiment, and their description will therefore not be repeated here. The transmission module 370 is configured to transmit a signal indicative of the corrected TOA value to the location calculator 500 for use in its calculation of the location of the mobile beacon 200. Thus, the timing devices 300-2 of the location system of the present embodiment together function as the aforementioned data storage and timing difference compensator.

### [Third Embodiment]

In the above-described first and second embodiments, delays between the clocks of the timing devices are compensated for by either synchronising the clocks to GNSS time, or by determining the delay of each clock relative to GNSS time and using the determined delay to correct the TOA value measured by the timing device (the TOA value preferably being measured as soon as possible before the delay is determined). However, in other embodiments, the clock 320 for timing the arrival of the beacon signal may be omitted from one or more of the timing devices in the location system, which timing device(s) may instead be configured to time the arrival of the beacon signal using a time stamp calculated using the received GNSS signal.

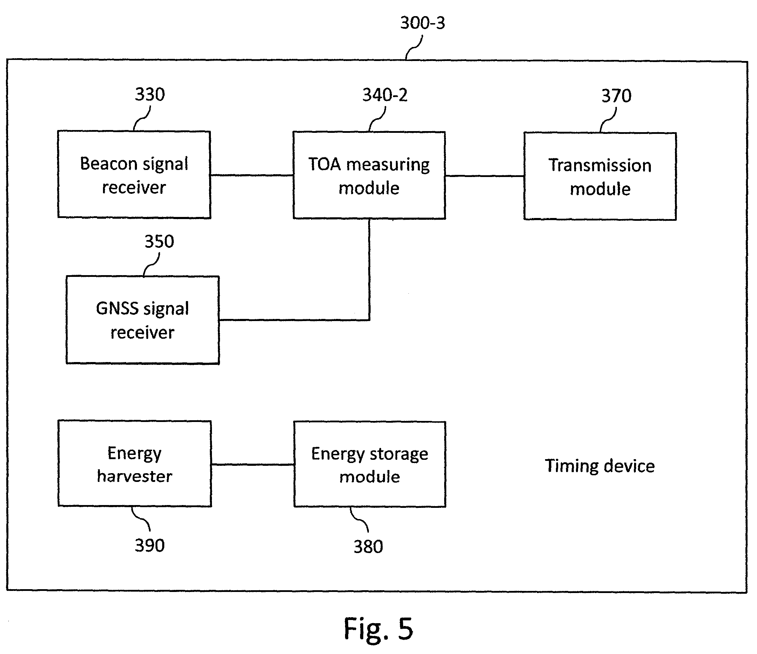

For example, the timing device 300-3 of the present embodiment illustrated in Fig. 5 comprises (in addition to the beacon signal receiver 330, GNSS signal receiver 350, transmission module 370, energy storage module 380 and energy harvester 390 described above) a modified TOA measuring module 340-2, which is configured to store fixed location coordinates defining a fixed location of the timing device 300-3, and calculate a GNSS time stamp using the received GNSS signal and the stored fixed location coordinates of the timing device 300-3 in response to the beacon signal receiver 330 receiving the beacon signal, the GNSS time stamp being indicative of a TOA of the beacon signal at the timing device 300-3. For example, a time stamp calculated most recently before or after the beacon signal is received may be selected as the time stamp of the received beacon signal. Alternatively, the calculation of a time stamp may be triggered by the receipt of the beacon signal by the beacon single receiver 330. The transmission module 370 of the present embodiment is configured to transmit a signal comprising the GNSS time stamp of beacons signal reception to the computer 500 for calculation of the location of the mobile beacon 200.

### [Modifications and Variations]

Many modifications and variations can be made to the embodiments described above.

For example, in a variant of the second embodiment, the clock delay calculation module 360-2 may calculate the necessary timing correction (i.e. delay) using the location coordinates of the timing device 300-2 and the GNSS signal received by the GNSS signal receiver 350 but not correct the TOA value measured by the TOA measuring module 340. In this variant, the transmission module 370 would transmit to the computer 500 implementing the functionality of the location calculator a signal comprising both the (uncorrected) TOA value measured by the TOA measuring module 340 and the calculated correction, so that the computer 500 would, in combination with the timing devices 300-2, perform the function of the aforementioned timing difference compensator, i.e. compensate for differences between the times kept by the clocks 320 by calculating, for each of the timing devices 300-2, a respective corrected TOA value of the beacon signal by correcting the TOA measured by the timing device 300-2 using the location coordinates of the timing device 300-2 and the GNSS signal received by the timing device 300-2.

It will therefore be appreciated that a clock delay calculation module may more generally be configured to store fixed location coordinates defining a fixed location of the timing device 300-2, and calculate a delay between the time kept by the clock 320 and a GNSS satellite signal, using the fixed location coordinates of the timing device 300-2 and the GNSS signal received by the GNSS signal receiver 350; the transmission module 370 would then be configured to transmit a signal based on the TOA measured by the TOA measuring module 340 and the delay calculated by the clock delay calculation module 360-2 to the location calculator for calculation of the location of the mobile beacon 200. Although all of the timing devices 300 in the location system of the first embodiment are the same, and all of the timing devices 300-2 in the location system of the second embodiment are the same, a location system according to an alternative embodiment may have one or more timing devices 300 of the first embodiment as well as one or more timing devices 300-2 of the second embodiment, as these are fully compatible and may be used together without any modification of the computer 500 implementing the location calculator being required. In other words, a location system according to an embodiment of the present invention may comprise the location calculator and two or more timing devices, wherein one or more of these timing devices are in accordance with the above-described first embodiment, with the remainder of the two or more timing devices in the location system (if any) being in accordance with the above-described second embodiment. In such variants, one or more of the timing devices according to either the first embodiment or the second embodiment (if any) may be replaced by a timing device 300-3 according to the third embodiment.

Although the timing devices are fixed to the inside of the windows 400 in the above embodiments, some or all of the timing devices may alternatively be fixed to the outside surface of the windows 400 (in which case the arrangement of the solar panel on the surface of the timing device would be changed to face away from the window in order to effectively harvest solar power; an arrangement which can maximise the solar panel size as the fixing means are not provided on the same side of the timing device as the solar panel). Moreover, the timing devices need not be fixed to the windows of the building, and one or more of the timing devices may instead be attached to or placed outside of a patio door, skylight, wall or other structure forming part of the periphery of the building that does not prevent the beacon signal emitted by the mobile beacon 200 from being received by the timing device, whilst allowing the timing device to receive a GNSS signal from at least one GNSS satellite.

In the above embodiments, the mobile beacon 200 is provided in the form of a wireless smart-card, which actively transmits the beacon signals. The mobile beacon 200 may alternatively be a passive device, which receives a signal transmitted by one of the timing devices and responds by transmitting the beacon signal. Although the mobile beacon 200 is configured to transmit a beacon signal in the form of a radio-frequency signal in the above embodiments, the mobile beacon 200 may alternatively transmit a beacon signal in the form of an ultrasonic signal, for example, in which case the beacon signal receiver 330 in each (indoor) timing device would be provided in the form of an ultrasound receiver. Each timing device of the above-described embodiments comprises an energy harvester 390 in the form of a solar panel. However, one or more of the timing devices of the location system may additionally or alternatively comprise an energy harvester 390 in the form of a thermo-electric converter which is configured to charge the energy storage module 380 based on a temperature gradient across it. Such a thermoelectric generator would charge the energy storage module 380 on hot days or nights, when the temperature inside the building 100 is lower than outside, and also on cold days or nights, when the temperature inside the building 100 is higher than outside. The energy harvester 390 may additionally or alternatively have a piezo-electric converter for charging the energy storage module 380 in response to vibrations caused by the confinement of acoustic waves in the building 100, for example.

## Claims

1. A location system for determining the location of a mobile beacon (200) inside a building (100) based on a beacon signal transmitted by the mobile beacon (200), the location system comprising:
at least two timing devices (300; 300-2), each timing device comprising:
a clock (320);
a beacon signal receiver (330) for receiving the beacon signal;
a time-of-arrival measuring module (340) for measuring, using the clock (320), a time-of-arrival of the received beacon signal at the beacon signal receiver (330); and
a Global Navigation Satellite System, GNSS, signal receiver (350) for receiving a GNSS signal from at least one GNSS satellite (600);
data storage (360; 360-2) configured to store fixed location coordinates defining respective fixed locations of the timing devices (300; 300-2);
a timing difference compensator (360; 360-2) configured to compensate for differences between the times kept by the clocks (320) using the GNSS signals received by the timing devices (300; 300-2) and the stored fixed location coordinates of the timing devices (300; 300-2); and
a location calculator (500) configured to calculate the location of the mobile beacon (200) within the building (100) based on measured time-of-arrival values that have been compensated for differences between the times kept by the clocks by the timing difference compensator (360; 360-2).

2. A location system according to claim 1, wherein:
the timing difference compensator (360) is configured to compensate for differences between the times kept by the clocks (320) by synchronising the clocks (320) using the stored location coordinates of the timing devices (300) and the GNSS signals received by the timing devices (300); and
the location calculator (500) is configured to calculate the location of the mobile beacon (200) within the building (100) using the time-of-arrival values measured by the time-of-arrival measuring modules (340).

3. A location system according to claim 1, wherein:
the timing difference compensator (360-2) is configured to compensate for differences between the times kept by the clocks (320) by calculating, for each of the two or more timing devices (300), a respective corrected time-of-arrival value of the beacon signal by correcting the time-of-arrival measured by the timing device (300-2) based on the stored location coordinates of the timing device (300-2) and the GNSS signal received by the timing device (300-2); and
the location calculator (500) is configured to calculate the location of the mobile beacon (200) within the building (100) using the corrected time-of-arrival values.

4. A location system according to any preceding claim, wherein the beacon signal receiver (330) of each timing device (300; 300-2) is configured to receive, as the beacon signal, a radio signal or an ultrasonic signal transmitted by the mobile beacon (200).

5. A location system according to any preceding claim, wherein at least one of the timing devices (300; 300-2) further comprises fixing means (310-1, 310-2) for fixing the timing device (300; 300-2) to a window (400) of the building (100).

6. A location system according to any preceding claim, wherein at least one of the timing devices (300; 300-2) further comprises:
an energy storage module (380) for powering the timing device (300; 300-2); and
an energy harvester (390) comprising one or more of a solar panel, a thermo-electric converter and a piezo-electric converter for charging the energy storage module (380).

7. A location system according to claim 6, wherein the energy storage module (380) comprises one of a capacitor and a supercapacitor.

8. A timing device (300) for use in a location system for determining the location of a mobile beacon (200) inside a building (100) based on a beacon signal transmitted by the mobile beacon (200), the location system comprising at least two of the timing devices and a location calculator (500) for calculating the location of the mobile beacon (200) based on signals transmitted by the timing devices, the timing device (300) comprising:
a clock (320);
a beacon signal receiver (330) for receiving the beacon signal;
a time-of-arrival measuring module (340) for measuring, using the clock (320), a time-of-arrival of the received beacon signal at the beacon signal receiver (330);
a Global Navigation Satellite System, GNSS, signal receiver (350) for receiving a GNSS signal from at least one GNSS satellite (600);
a clock synchronisation module (360) configured to store fixed location coordinates defining a fixed location of the timing device (300), and to synchronise the clock (320) to a GNSS satellite signal using the fixed location coordinates of the timing device (300) and the GNSS signal received by the GNSS signal receiver (350), the time-of-arrival measuring module (340) being configured to measure the time-of-arrival of the received beacon signal at the beacon signal receiver (330) using the synchronised clock (320); and
a transmission module (370) for transmitting a signal comprising the time-of-arrival measured by the time-of-arrival measuring module (340) to the location calculator (500) for calculation of the location of the mobile beacon (200).

9. A timing device (300-2) for use in a location system for determining the location of a mobile beacon (200) inside a building (100) based on a beacon signal transmitted by the mobile beacon (200), the location system comprising at least two of the timing devices and a location calculator (500) for calculating the location of the mobile beacon (200) based on signals transmitted by the timing devices, the timing device (300-2) comprising:
a clock (320);
a beacon signal receiver (330) for receiving the beacon signal;
a time-of-arrival measuring module (340) for measuring, using the clock (320), a time-of-arrival of the received beacon signal at the beacon signal receiver (330);
a Global Navigation Satellite System, GNSS, signal receiver (350) for receiving a GNSS signal from at least one GNSS satellite (600);
a clock delay calculation module (360-2) configured to store fixed location coordinates defining a fixed location of the timing device (300-2), and to calculate a delay between the time kept by the clock (320) and a GNSS satellite signal using the fixed location coordinates of the timing device (300-2) and the GNSS signal received by the GNSS signal receiver (350); and
a transmission module (370) for transmitting a signal based on the time-of-arrival measured by the time-of-arrival measuring module (340) and the delay calculated by the clock delay calculation module (360-2) to the location calculator (500) for calculation of the location of the mobile beacon (200).

10. A timing device (300-2) according to claim 9, wherein the transmission module (370) is configured to transmit to the location calculator (500), as the signal for calculating the location of the mobile beacon (200), one of:
a signal comprising both the time-of-arrival measured by the time-of-arrival measuring module (340) and the delay calculated by the clock delay calculation module (360-2); and
a signal comprising a corrected time-of-arrival which is indicative of a sum of the time-of-arrival measured by the time-of-arrival measuring module (340) and the delay calculated by the clock delay calculation module (360-2).

11. A timing device (300-3) for use in a location system for determining the location of a mobile beacon (200) inside a building (100) based on a beacon signal transmitted by the mobile beacon (200), the location system comprising at least two of the timing devices and a location calculator (500) for calculating the location of the mobile beacon (200) based on signals transmitted by the timing devices, the timing device (300-3) comprising:
a beacon signal receiver (330) for receiving the beacon signal;
a Global Navigation Satellite System, GNSS, signal receiver (350) for receiving a GNSS signal from at least one GNSS satellite (600);
a time-of-arrival measuring module (340-2) configured to store fixed location coordinates defining a fixed location of the timing device (300-3), and calculate a GNSS time stamp using the received GNSS signal and the stored fixed location coordinates of the timing device (300-3) in response to the beacon signal receiver (330) receiving the beacon signal, the GNSS time stamp being indicative of a time-of-arrival of the beacon signal at the timing device (300-3); and
a transmission module (370) for transmitting a signal comprising the GNSS time stamp to the location calculator (500) for calculation of the location of the mobile beacon (200).

12. A timing device (300; 300-2) according to any of claims 8 to 11, wherein the beacon signal receiver (330) is configured to receive, as the beacon signal, a radio signal or an ultrasonic signal transmitted by the mobile beacon (200).

13. A timing device (300; 300-2) according to any of claims 8 to 12, further comprising fixing means (310-1, 301-2) for fixing the timing device (300; 300-2) to a window (400) of the building (100).

14. A timing device (300; 300-2) according to any of claims 8 to 13, further comprising:
an energy storage module (380) for powering the timing device (300; 300-2); and
an energy harvester (390) comprising one or more of a solar panel, a thermo-electric converter and a piezo-electric converter for charging the energy storage module (380).

15. A timing device (300; 300-2) according to claim 14, wherein the energy storage module (380) comprises one of a capacitor and a supercapacitor.
